# EUROPEAN PATENT SPECIFICATION

(11) **EP 2 032 507 B1**
(45) Date of publication and mention of the grant of the patent: **29.06.2011**
(21) Application number: 07719650.9
(22) Date of filing: 27.04.2007
(51) Int. Cl.: C02F 1/78, C02F 1/467, C25B 1/13

(54) **MINIATURE OZONE GENERATOR AND USE THEREOF FOR PURIFYING WATER**
MINIATUR-OZONGENERATOR UND VERWENDUNG DAVON ZUR REINIGUNG VON WASSER
GÉNÉRATEUR D'OZONE MINIATURE ET UTILISATION DE CELUI-CI POUR PURIFIER L'EAU

(30) Priority: 18.05.2006 CA 2547373
(43) Date of publication of application: 11.03.2009
(73) Proprietor: Ozomax Inc., Shefford QC J2M 1X2 (CA)
(72) Inventor: SALAMA, Amir, Shefford, Québec J2M 1X2 (CA); SALAMA, Marianne, Shefford, Québec J2M 1X2 (CA)
(74) Representative: Myon, Gérard Jean-Pierre
(86) International application number: PCT/CA2007/000724
(87) International publication number: WO 2007/134429

(56) References cited:
- SU-A1- 1 428 707
- US-A- 5 154 895
- US-A- 5 735 040
- US-A1- 2004 011 665
- US-A1- 2005 109 613
- US-B1- 6 180 014
- US-B1- 6 395 170

## Description

### FIELD OF THE INVENTION

The present invention relates to a miniature device for generating ozone *in-situ* in water in order to remove therefrom a large variety of pollutants, especially organic pollutants, in addition to bacteria and viruses, and thus make the water drinkable.

The invention is not limited to the purification of water, but may pertain to any sort of liquid solution containing water such as fruit juice, milk or dairy liquids, tea, coffee, or the like.

In other words, the present invention relates to a miniature water purifier printed on a printed circuit board (PCB) which can work with a very low voltage current produced by a power supply integrated to the PCB or by an external power source, such as batteries, solar panels, electric transformer, or the like and thus be easily portable.

The size of the miniature ozone generator can be as small as a stamp and energetically self-sufficient when it is directly plunged into a glass or a bottle of water to purify it.

The present invention also relates to the use of the miniature water purifier directly in a glass of water or integrated to a water bottle, and methods for doing the same.

### DESCRIPTION OF THE PRIOR ART

In order to carry out purification of water without the use of biocides such as chlorine and other chemicals, it is well known in the art to use ozone (O₃) as a disinfectant. Ozone is usually prepared outside the medium (water) and then injected inside the water by means of injectors or bubbling in a contact column. Such makes the process bulky and costly as it involves the use of several devices.

Production of ozone (O₃) by electrolysis is a well known process since the 19^{th} century. By way of example, U.S. patents Nos. 5,250,177 and 5,154,895 disclose devices for generating ozone by electrolysis. The so generated ozone is then used for the purification of water. U.S. patent No. 4,728,441 discloses a device wherein ozone is produced from oxygen generated by electrolysis. However, the so generated ozone is recovered and used outside of the device. U.S. patents Nos. 4,416,747; 5,205,994; 5,686,051; 5,203,972 and 5,779,865 disclose devices using solid electrolyte to produce ozone. U.S. patent No. 3,623,970 discloses a device for producing a stream of ozone by electrolysis of water and conversion of the oxygen that is so produced into ozone.

It is further known in the art that ozone can be produced via UV light. Such as in U.S. patents Nos. 4,189,363 (BEITZEL) and 4,992,169 (IZUMIYA).

It is further known that the efficiency of an apparatus using U.V. light to destroy micro-organisms can be enhanced if ozone is mixed with the water to be purified, such as in U.S. patent No. 5,266,215 (ENGELHARD).

In U.S. patent No. 5,151,252 (MASS), there is disclosed a photochemical reactor for the treatment of a fluid polluted with photoreactants components. This patent discloses that the walls of the reactor in the treatment region may be coated with a catalyst in order to increase the rate of secondary reactions that occur with reaction products produced by the initial photochemical reaction.

Salt bridges with membranes were used to separate the ozone, oxygen and mixed oxidants produced around the anode from the hydrogen produced at the cathode. Platinum (Pt) wires were used as the anode and as the cathode. The idea of membrane separation was also described and improved upon by the present inventor in U.S. Patent No. 6,180,014 (SALAMA) wherein relatively higher voltages were used to get sufficient ozone production than the new inventive device described hereafter.

Water purification systems are generally large devises, uneasy to carry and travel with. It would therefore be a significant advance in the art of water purification system to provide a portable, miniature and reusable water purification system, working with a low voltage power supply by keeping the same purification efficiency and usable for purifying the water of a glass or a bottle within a few second period of time.

### SUMMARY OF THE INVENTION

The object of the present invention is based on the discovery that the size of the hydrogen bubbles produced during the electrolysis strongly influences the final amount of ozone. The bigger are the bubbles, the higher is the amount of ozone, the better and faster is the purification of the water.

It is therefore a first object of the present invention to provide an ozone generator device for purifying water which comprises a printed circuit board (PCB) having a first and second surface, and an ozone producing circuit (OPC) printed on the first surface of the PCB. The OPC comprises a plurality of anodes and cathodes that are alternatively printed on the PCB and connected in parallel relationship to each other and to a power supply device. The ozone generator device also includes on the first surface of the printed circuit board, underneath the ozone producing circuit, a thin film heating element connected to the power supply. Anodes and cathodes of the OPC have rough surfaces, whereby, in use, when the ozone generator device is plunged into a vessel containing water to be purified, the cathodes produce hydrogen bubbles and the anodes produce ozone and mixed oxidants, and wherein thanks to the rough surfaces, said cathodes lead to a coalescence of said hydrogen bubbles into larger hydrogen bubbles, and thus to a higher concentration of ozone.

As it is well known in the art, the electrolysis of water leads to the creation of hydrogen gas (H₂) at the cathodes (positive poles), and oxidants at the anodes (negative poles). The oxidants include ozone gas (O₃) and mixed oxidants including oxygen gas (O₂), peroxides, hydroxyl radicals, or the like. The contact between H₂ and O₃ has to be limited in order to enhance the production of O₃ in water and therefore enhance the water purification.

Thus, it has been discovered that the roughness of the surfaces of the cathodes allows the production of a higher amount of ozone comparatively to smooth surfaces under the same voltage current.

Indeed, rough surfaces have a higher effective surface in contact with the water and allows the production of larger hydrogen bubbles by coalescence of the smaller hydrogen bubbles normally produced by smooth surfaces, and thus greatly reducing the reactivity surface between the hydrogen bubbles and the oxidants produced by the anodes, such as ozone.

Consequently, the unwanted parasite reaction of the ozone with the hydrogen occurring between the electrodes is considerably reduced, leading to a higher production of ozone by using a lower voltage current and a very efficient purification of the water.

Anodes and cathodes of the ozone generator device according to the invention are preferably made of or plated with:
- activated or non-activated carbon fibres or nanotubes,
- metals or alloys of these metals selected from columns 3 to 13 (also named IB to VIIIB and IIIB) of the Periodic Table.

More preferably, the cathode is made or coated with a metal or a coating capable of absorbing hydrogen such as:
- metals or alloys from subgroups IIIB, IVB, VB, VIIB or VIIIB of the periodic table of elements, more preferably selected from, but not limited to, palladium, palladium alloys, magnesium alloys, and titanium alloys;
- special activated carbons, or
- other electrically conductive or H₂ absorbing materials known in the art.

It has to be understood that the size and/or the number of ozone generator device according to the invention are selected according to the amount and quality of water to be purified.

The ozone generator device may have different configurations which are mainly based on different ways to electrically power the electrodes.
I) More particularly, in accordance with a first aspect of the invention, the power supply is integrated to the printed circuit board. In that case, the power supply may comprise a plurality of galvanic cells printed on the first surface of the printed circuit board (PCB) and connected in series relationship to each other.
   The galvanic cells are made of any sort of metal combinations well known in the art of making galvanic cells. Preferably, the metal combination is selected from Pt/Al, Pt/Ti, Pt/Mn and Pt/Mg.
   Otherwise, the power supply device may be at least a battery and/or at least a silicon solar panel fixed on one of the surfaces of the printed circuit board.
   Such a first aspect of the invention may allow a direct use of the ozone generator device by plunging it into a vessel, such as a glass, a bottle, or the like, containing the water to be purified.
   Accordingly, the method for purifying the water contained into the selected vessel comprises the steps of:
   a) plunging the ozone generator device into the vessel containing water to be purified, the ozone generator device being defined according to the first aspect of the invention detailed above, and
   b) waiting for an adequate period of time in order to let the ozone generator device producing ozone and purifying the water.

   An optional step of gently shaking the vessel may be added to the above mentioned method in order to reduce the adequate period of time needed to purify the water.
   By "adequate period of time", it has to be understood a period of time that will be depending on the power of the device and the amount and quality of water to be efficiently and safely treated.
II) In accordance with a second aspect of the invention, the power supply device is exterior to the printed circuit board and linked to the ozone producing circuit via electric wires.

In accordance with this second aspect of the invention, the power supply device may comprise a plurality of galvanic cells as defined in part I) above, printed on another printed circuit board and connected in series relationship to each other. As aforesaid, the power supply device is then linked to the ozone producing circuit via electric wires. In use, the power supply is turned on by plunging it into another vessel containing an electrolyte solution.

As aforesaid, the electrolyte solution may be water or a mix of water with one or more salts such as sodium chloride.

Accordingly, the method for purifying the water contained into the selected vessel comprises the steps of::
a) plunging into water to be purified the zone generator device as defined above;
b) plunging the power supply of said ozone generator device in another vessel containing an electrolyte solution; and
c) waiting for an adequate period of time in order to let the ozone generator device producing ozone and purifying the water.

In accordance with this second aspect of the invention, the external power supply device may also be a battery or a plurality of batteries, rechargeable or not.

The power supply device may further be an electric transformer alimented by a public electric system or an individual electric system, such as a solar panel, a windmill or the like. This configuration may be particularly useful when the device is used in a region where public electricity is not available.

In all cases, the power supply is linked to the ozone producing circuit via electric wires. In use, the power supply is turned on for producing current and making the ozone generator device producing ozone.

In accordance with this second aspect of the invention, the method for purifying water comprises the steps of:
a) plunging the zone generator device according to this second aspect of the invention into water to be purified;
b) turning on the power supply of said ozone generator; and
c) waiting for an adequate period of time in order to let the ozone generator device producing ozone and purifying the water.

Here again, an optional step of gently shaking the vessel may be added to the above mentioned method in order to reduce the adequate period of time needed to purify the water.

As aforesaid, the ozone generator device comprises on the first surface of the PCB and underneath the ozone producing circuit, a thin film heating element connected to the power supply.

Optionally, the ozone generator device may also comprise on the second surface of the PCB another thin film heating element also connected to the power supply. In use, the thin film heating elements produce heat. The production of heat leads to the regeneration of the cathodes.

According to another preferred embodiment of the invention, the ozone generator device may further comprise a second ozone producing circuit printed on the second surface of the printed circuit board (PCB). This second ozone producing circuit being identical to the ozone producing circuit printed on the first surface of the PCB and defined above.

According to another preferred embodiment of the invention, the ozone generator device may further comprise a plurality of lights or light emitting diodes (LEDs) fixed on the printed circuit board, and also connected to said power supply, in order to help the ozone in the purification of the water.

Production of light is well known as facilitate the purification of water by ozone and enhance the formation of O₃ from O₂ and mixed oxidants such as, but not limited to hydroxyl radicals or peroxides. To efficiently enhance the water purification, the lights or LEDs preferably have a wavelength from about 1 nm (far ultra-violet light) to 600 nm (green light).

The present invention also concerns a portable ozone generator device for purifying water comprising a plurality of ozone generator device as defined above. The miniature devices may be arranged in a geometrical manner, such a pyramid, a cube or the like. Each face of the geometry comprises a miniature ozone generator device according to the invention.

The present invention also concerns the use of the ozone generator device as defined above, for purifying water and to make it drinkable.

The ozone generator device according to the present invention has the advantage to be small enough to be easily transported and plunged into a glass, a jug or a bottle containing the water to be purified. The ozone generator device may be adapted and permanently fixed inside the vessel for purifying the water every time the vessel is filled up with water.

Therefore, the present invention also concerns the use of the device as defined above in a vessel containing water to be purified. Preferably, this vessel is a bottle. More preferably, the bottle has a neck comprising a drinking nipple, and optionally a filter. The filter may be made of granular activated carbon, carbon block, membrane filter or resins.

Preferably, the above mentioned bottle may have an internal volume and comprise a separating wall to separate this internal volume into a top volume containing water to be purified and a bottom volume containing an electrolyte solution. The ozone generator device as defined above may be inserted through the separating wall. Indeed this separating wall may comprise a hole sized to fit the ozone generator device. Once installed, the ozone producing circuit of the ozone generator remains into the top volume of the bottle and the power supply device remains into the bottom volume.

Here again, the electrolyte solution contains water or a mix of water and a salt such as sodium chloride.

More preferably, the above mentioned separating wall may be a membrane allowing the water to go through said membrane and maintaining the salt into the bottom volume.

Optionally, the above mentioned bottle may have an internal volume and a bottom, the bottle comprising a compartment fixed to its bottom and hermetically separated from the internal volume of the bottle containing water to be purified. By being hermetic, the compartment may contain an electric power supply, such as at least one battery, connected to the ozone producing circuit of the ozone generator through the separating wall.

The present invention will be better understood upon reading the following non-restrictive description of preferred embodiments thereof, made with reference to the accompanying drawings.

### BRIEF DESCRIPTION OF THE DRAWINGS

FIGURE 1A is a schematic representation of a miniature ozone generator according to a preferred embodiment of the present invention plunged into a glass of water.
FIGURE 1B is a schematic representation of a miniature ozone generator with galvanic cells internal power supply according to a preferred embodiment of the present invention.
FIGURE 2 is a schematic representation of a miniature ozone generator with external galvanic cells power supply according to another preferred embodiment of the present invention.
FIGURE 3 is a schematic representation of the miniature ozone generator as illustrated on figure 1B plunged into a bottle of water having a filter into a nipple.
FIGURE 4 is a schematic representation of an ozone generator with internal power supply according to another preferred embodiment of the present invention plunged into a bottle of water having a filter and a compartment containing an electrolyte solution.
FIGURE 5 is a schematic representation of a miniature ozone generator with external power supply according to a preferred embodiment of the present invention plunged into a bottle of water having a filter and a power supply integrated to the bottle.

### DETAILED DESCRIPTION OF THE INVENTION

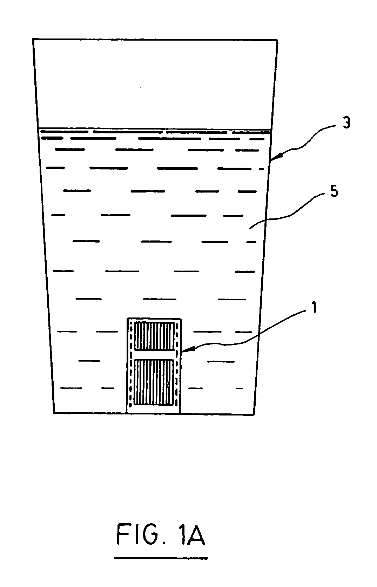

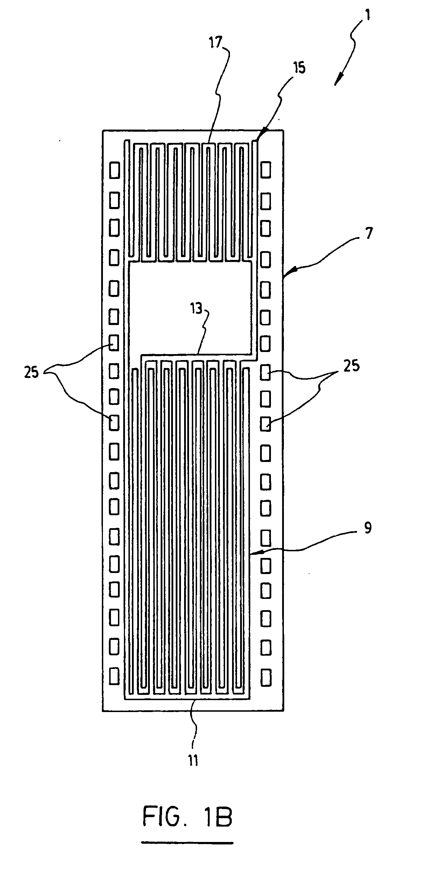

As illustrated on FIGURE 1A, the ozone generator device (1) for purifying water is small enough to be plunged into a vessel, such as a glass (3), containing water (5). The miniature ozone generator according to a preferred embodiment of the invention is better illustrated and detailed on FIGURE 1B wherein one can see that, the ozone generator device (1) for purifying water (5) contains a printed circuit board (7), named PCB hereinafter.

The PCB (7) can be made of ceramic, polymer (such as polycarbonate or other), glass, anodized aluminium, or any sort of substrate known in the art of printed circuit board.

On the PCB (7), an ozone producing circuit (9), referred as OPC hereinafter, has been printed. The OPC is constituted of a plurality of anodes (11) and cathodes (13) printed on the PCB (7) and connected in parallel relationship to each other to a power supply device (15).

According to the preferred embodiment illustrated on FIGURE 1B, the power supply (15) is constituted of a plurality of galvanic cells (17) printed on the same PCB (7) than the OPC (9), and connected in series relationship to each other and to the OPC. Once the ozone generator (1), and therefore together with the galvanic cells (17), are plunged into the water (5), the galvanic cells (17) produce a current, the voltage of which is sufficient to make the OPC (9) producing ozone and purifying the water. In that case, the water to be treated serves as electrolyte solution.

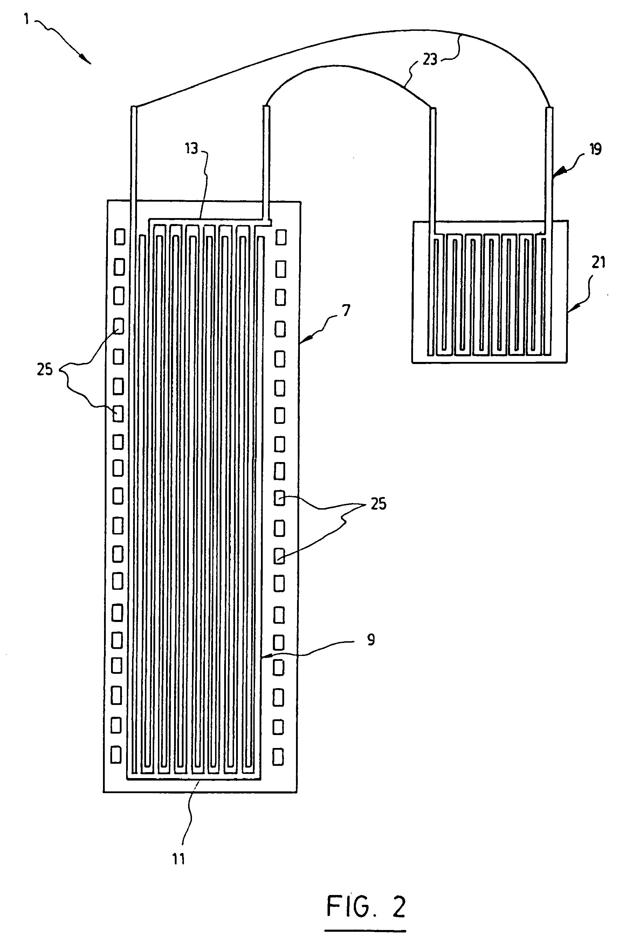

FIGURE 2 illustrates an ozone generator device (1) for purifying water according to another preferred embodiment of the invention, which is quite similar to the device illustrated on FIGURE 1B, except that the power supply is an external power supply device (19) printed on another PCB (21) independent of the first PCB (7). The external power supply device (19) is thus linked to the OPC (9) via electric wires (23). In use, the external power supply (19) is plunged into another vessel containing water or an electrolyte solution, preferably an electrolytic solution (not illustrated on FIGURE 2).

The lines thickness of the galvanic cells (17), such as the ones illustrated on FIGURE 1B or 2, can be of any range but preferably between 1,27 µm (50 microinches) to 1,27 mm (50 milli-inches). The cells are made of any combination of metals provided that enough cells may be connected in series to provide the required electromotive force (EMF) on the OPC (9). The metal combinations include Pt/Al, Pt/Ti, Pt/Mn, Pt/Mg or any sort of combination of metals well known in the art of galvanic cells. Other possible metal combinations can be used, such as the ones described in Table 2, on page 776, of "Modem Electroplating", 3rd Edition by THE ELECTROCHEMICAL SOCIETY INC., Princeton, NJ, Published by Wiley Interscience, 1974.

As it is well known, the electrolysis process of the OPC (9) also produces molecular hydrogen (H₂) at the cathodes (13). It is well known that H₂ easily reacts with ozone (O₃) produced at the anodes (11) for making water (H₂O). In order to minimize the effect of H₂ on the production of ozone, the surfaces of the anodes (11) and cathodes (13) of the OPC (9) have been made rough. As aforesaid, the roughness of the surfaces leads to a coalescence of tiny hydrogen bubbles into larger hydrogen bubbles. These larger hydrogen bubbles have a much smaller effective surface area, thousand of times smaller than tiny hydrogen bubbles. These larger hydrogen bubbles are orders of magnitude less reactivity with the ozone and mixed oxidants produced at the anodes (11), even if intermixing occurs with the ozone. In other words, these larger bubbles will produce less soluble hydrogen gas (H₂) in the water, hence less parasite reaction with O₂, O₃ and other mixed oxidants like peroxides, hydroxyl radicals. It results a higher production of ozone by the OPC (9) to purify the water.

The lines thickness of the ozone producing circuit OPC (9), namely the electrodes (11, 13) may be of any width, preferably from 0,1 µm and 100 µm. The space between the lines can be of any value, preferably from 0,1 µm to 100 µm. The electrodes are made of compound selected from columns 3 to 14 of the Periodic Table. Preferably, the electrodes are made of plated Pt, Pd, Au or separate or other in combination by rough plating or dendritic type electroplating.

The ozone generator device illustrated on FIGURE 1 is thus energetically self-sufficient. It has also a very light weight and a small size, due to the fact that the miniature portable ozone generator device may be constructed using thin film technology.

Ozone and mixed oxidants are formed in situ using anodes made of:
- plating platinum family group metal such as palladium, rhenium, rhodium;
- gold on a rough surface or using dendritic plating; or
- activated or non-activated carbon fibers or nanotubes.

The hydrogen produced at cathodes (13) may be limited or removed to prevent its scavenging effects on the ozone and mixed oxidants produced at the anode. To do so, the cathodes are made of metal and alloys from the Subgroup IIIB, IVB, VB, VIIIB of the Periodic Table, such as palladium, palladium alloys or magnesium alloys.

The cathodes can be also made of special activated carbons or other electrically conductive or H₂ absorbing materials. The hydrogen absorbing capability of the cathode may be regenerated by including a thin film heating element on the back of the substrate or underneath the electrolytic area where hydrogen and ozone/mixed oxidants are produced.

As aforesaid, cathodes and anodes of the ozone producing circuit (OPC) can also be made of special nano-technology processes to enhance the formation of ozone and absorb the hydrogen. This will also enhance the formation of larger hydrogen bubbles, which with a smaller surface area, will minimize their scavenging effect on the oxygen and ozone/mixed oxidants produced.

As also aforesaid, the ozone generator illustrated on FIGURE 1 is self-powered by incorporating galvanic cells (11) on the PCB (3) and using the water (13) to be treated as electrolyte. The current production is possible thanks to the small distances between the metals. In this way, ozone and mixed oxidants are produced at high concentrations due to the small distances between the electrodes in the OPC.

The production of ozone and other oxidative compounds is increased due to the roughness or dendrite plating of the anodes and cathodes, which increase the effective surface area of the electrodes.

The use of precious metals for making the electrodes provides a high protection against chemicals, oxidation and rust and thus making the device long lasting. Furthermore, thin film and printed circuit board technology, thin film photolithography, thick film and conductive paste printing technologies allow the manufacture of the device at low cost and thus a mass production of it.

The device according to the present invention can be single-sided or double-sided for enhanced performance or extended life by covering and using each side at a time separately.

A plurality of single-sided device may be installed in a geometrical manner such as a pyramid, a cube or the like.

The PCB can be from a few millimetres wide to several centimeters wide depending on the volume and quality of water to be treated. Its length can be from a few millimetres to several centimeters long as well. This is made possible thanks to photolithographic technology for printing the electrodes on the PCB.

As illustrated on FIGURES 1B and 2, miniature lights or LEDs (25) can also be introduced on the PCB (7). As aforesaid, production of a light with a wavelength from 1 to 600 nm, is well known as facilitating the purification of water by ozone and enhance the formation of O₃ from O₂ and mixed oxidants such as, but not limited to hydroxyl radicals or peroxides.

According to another preferred embodiment of the present invention, not illustrated on the FIGURES, the OPC can also be externally powered using batteries such as small watch-sized batteries, AAA batteries, AA batteries, or silicon solar panels integrated on the PCB.

The ozone generator device according to the invention may also be used directly in a bottle in order to purify the water contained in this bottle.

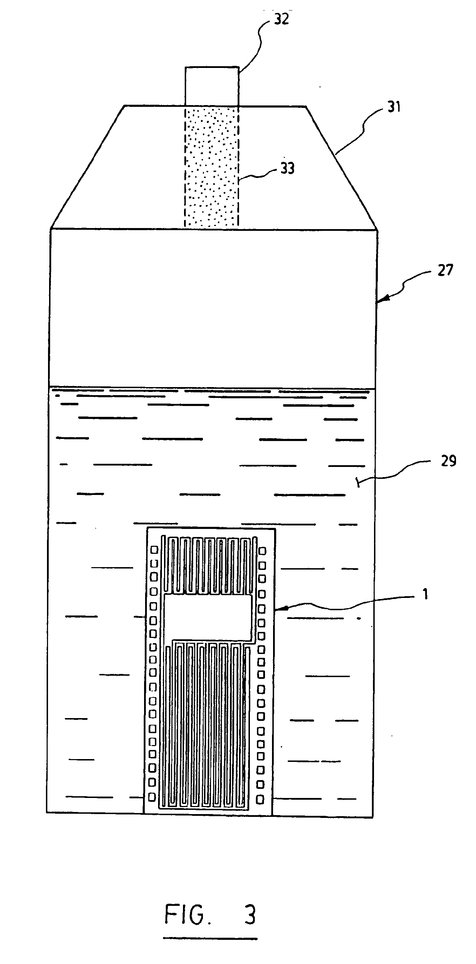

As illustrated on FIGURE 3, the ozone generator device (1) is placed in a bottle (27) containing water (29). Preferably, the bottle may comprise a cap (31) having a drinking nipple (32) equipped with a filter (33). This filter can be granular activated carbon, carbon block, membrane filter, resin or the like. The purification of the water will be enhanced by the use of the ozone generator device (1) combined with the use of the filter (33). The ozone generator device is self-powered once the ozone generator containing the galvanic cells is plunged into the water (29) of the bottle (27). In order to purify the water contained in a bottle, the ozone generator device should have a bigger size than the ozone generator device illustrated on FIGURE 1A and used to purify the water of a small glass.

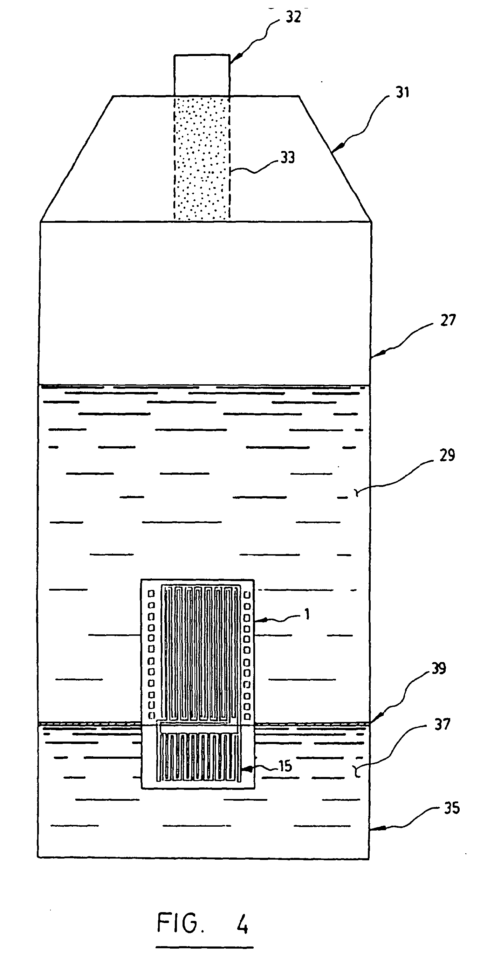

According to another preferred embodiment of the invention illustrated on FIGURE 4, the ozone generator device (1) may be also used in a drinking bottle (27), having the particularity to have a compartment (35) containing an electrolyte (37). The compartment (35) is separated from the rest of the bottle containing water (29) by a membrane (39). The membrane is permeable to the water but impermeable to salts contained in the electrolyte solution (37). The ozone generator device (1) is placed through the membrane. The power supply (15) is plunged into the compartment (35) containing the electrolyte (37). The ozone producing circuit (9) is plunged into the water to be treated. The presence of the compartment containing electrolyte enhances the production of electricity and therefore, ameliorates the production of ozone into the water to be treated.

The bottle (27) as illustrated on FIGURE 4 may also contain a drinking nipple (32) having a filter (33) made of granular activated carbon, carbon block, membrane filter, resin or the like.

The electrolyte solution (37) contained in the compartment (35) may be water, tap water or a salt solution such as table salt (NaCl) or the like. In the case where the water to be treated is conductive enough, the compartment (35) may be filled with the same water to be treated which reacts as an electrolyte in order to power the ozone generator device.

According to another preferred embodiment illustrated on FIGURE 4, the membrane (39) may be a solid and hermetic wall impermeable to liquids or salts. In use, the compartment (35) will be first filled with the electrolytes or water, and then the wall will be placed in the bottle (27).

In all cases, the membrane or wall (39) has a hole sized to fit hermitically with the ozone generator device and fixed it through the membrane or wall.

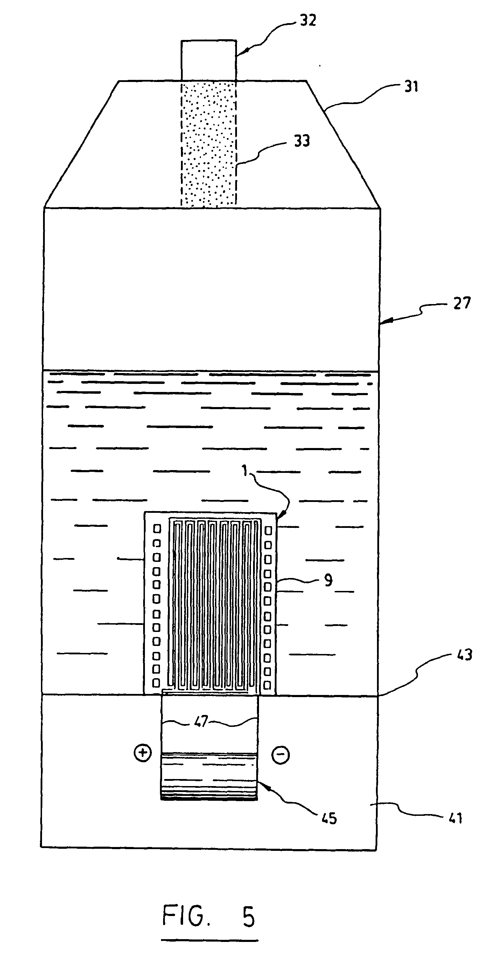

FIGURE 5 illustrates another preferred embodiment of the invention wherein the ozone generator device (1) is placed into a bottle (27) containing a compartment (41) placed at the bottom of the bottle (43). This compartment (41) comprises a power supply (45) directly connected to the ozone producing circuit (9) of the ozone generator device (1) via electric wires (47) through the bottom (43).

The power supply (45) may be a transformer transforming high voltage electricity (such as 110 or 220 volts) to a low voltage current adapted to power the ozone generator (1). As illustrated on FIGURE 5, the power supply device may also be a battery. It may also be a plurality of batteries, such as small watch ties batteries, AAA batteries or the like.

As illustrated on FIGURES 4 and 5, the bottle (27) may also have a drinking nipple (32) installed on the cap (31) comprising a filter (33). As aforesaid, this filter (33) can be granular activated carbon, carbon block, membrane filter, resins or the like.

Although the present invention has been explained hereinabove by way of a preferred embodiment thereof, it should be pointed out that any modifications to this preferred embodiment within the scope of the appended claims is not deemed to alter or change the nature and scope of the present invention.

## Claims

1. An ozone generator device (1) for purifying water (5), said device comprising:
a printed circuit board (7) having a first and second surface;
an ozone producing circuit (9) printed on the first surface of said printed circuit board (7), said ozone producing circuit comprising a plurality of anodes (11) and cathodes (13) that are alternatively printed on the printed circuit board (7) and being connected in parallel relationship to each other and to a power supply device (15), said anodes (11) and cathodes (13) having rough surfaces, and
on the first surface of the printed circuit board, underneath the ozone producing circuit (9), a thin film heating element connected to the power supply (15),
whereby, in use, when said ozone generator (1) is plunged in a vessel (3) containing water (5) to be purified, said cathodes (13) produce hydrogen bubbles and said anodes (11) produce ozone and mixed oxidants, and wherein thanks to said rough surfaces, said cathodes lead to a coalescence of said hydrogen bubbles into larger hydrogen bubbles, and thus to a higher production of ozone.

2. The ozone generator device according to claim 1, wherein said power supply (15) is integrated to said printed circuit board (7).

3. The ozone generator device according to claim 2, wherein said power supply device (15) comprises a plurality of galvanic cells (17) printed on the first surface of said printed circuit board (7) and connected in series relationship to each other.

4. The ozone generator device according to claim 2, wherein said power supply device (15) comprising at least a battery and/or at least a silicon solar panel, fixed on one of said surfaces of said printed circuit board.

5. The ozone generator device according to claim 1, wherein when said power supply device (19) is exterior to the printed circuit board (9) and linked to said ozone producing circuit via electric wires (23).

6. The ozone generator device according to claim 5, wherein said power supply device (19) comprises a plurality of galvanic cells printed on another printed circuit board (21) and connected in series relationship to each other.

7. The ozone generator device according to claims 3 or 6, wherein said galvanic cells (17) are made of metal combinations selected from Pt/Al, Pt/Ti, Pt/Mn and Pt/Mg.

8. The ozone generator device according to claim 5, wherein said power supply device is a battery, a plurality of batteries, an electric transformer alimented by a public electric system or an individual electric system, such as a solar panel or a windmill.

9. The ozone generator device according to any one of claims 1 to 8, wherein:
said anodes and cathodes are made of or plated with activated or non-activated carbon fibres or nanotubes; or said anodes and cathodes are made of or plated with metals or alloys of said metals selected from columns 3 to 13 of the Periodic Table such as anodes and cathodes made of plated with palladium, palladium alloys, magnesium alloys, or titanium alloys.

10. The ozone generator device according to any one of claims 1 to 9, further comprising on the second surface of the printed circuit board another thin film heating element connected to the power supply.

11. The ozone generator device according to any one of claims 1 to 10, further comprising a second ozone producing circuit printed on the second surface, said second ozone producing circuit being identical to the ozone producing circuit printed on the first surface as defined in claim 1.

12. The ozone generator device according to any one of claims 1 to 11, further comprising a plurality of lights or light emitting diodes fixed on the printed circuit board and also connected to said power supply, said lights or light emitting diodes producing a light with a wavelength from 1 to 600 nm, whereby, in use, the light facilitates the purification of water by ozone.

13. Use of an ozone generator device as defined in any one of claims 1 to 12, for purifying water to make it drinkable.

14. Use of an ozone generator device as defined in claim 3 or 6 in a bottle containing water to be purified, wherein the bottle has an internal volume and comprises a separating wall, such as a membrane, to separate said internal volume into a top volume containing water to be purified and a bottom volume containing an electrolyte solution, such as water or a mix of water and a salt such as sodium chloride, said ozone generator being inserted through the separating wall, said separating wall having a hole sized to fit the ozone generator device, the ozone producing circuit being into the top volume of the bottle and the power supply device being into the bottom volume.

15. The use of an ozone generator device as defined in claim 8 in a bottle containing water to be purified, wherein the bottle has an internal volume and a bottom, said bottle comprising a compartment fixed to said bottom and hermetically separated from the internal volume of the bottle containing water to be purified, said compartment containing a power supply connected to the ozone producing circuit of the ozone generator device.

## Patentansprüche

1. Eine Ozon erzeugende Einrichtung (1) zur Reinigung von Wasser (5), wobei die besagte Einrichtung aufweist:
- eine Leiterplatte (7) die eine erste und eine zweite Fläche besitzt;
- einen Ozon erzeugenden Schaltkreis (9), der auf der ersten Fläche der Leiterplatte (7) aufgebracht ist, wobei der Ozon erzeugende Schaltkreis mehrere Anoden (11) und Kathoden (13) enthält, die abwechselnd auf die Leiterplatte (7) aufgebracht sind und in Parallelschaltung miteinander und mit einer Strom erzeugenden Einrichtung (15) verbunden sind, wobei die Anoden (11) und Kathoden (13) eine raue Oberfläche besitzen; und
- auf der ersten Fläche der Leiterplatte unter dem Ozon erzeugenden Schaltkreis (9) ein mit der Stromquelle (15) verbundenes Dünnfilm-Heizelement,
wobei, beim Betrieb, wenn die besagte Ozon erzeugende Einrichtung (1) in ein zu reinigendes Wasser (5) enthaltendes Gefäß (3) getaucht wird, die Kathoden (13) Wasserstoffblasen erzeugen und die Anoden (11) Ozon und gemischte Oxidantien erzeugen, und wobei die raue Oberfläche der Kathoden zur Koaleszenz der Wasserstoffblasen in größere Wasserstoffblasen und so zu einer größeren Produktion von Ozon führt.

2. Die Ozon erzeugende Einrichtung nach Anspruch 1, wobei die Stromquelle (15) in die Leiterplatte (7) integriert ist.

3. Die Ozon erzeugende Einrichtung nach Anspruch 2, wobei die Strom erzeugende Einrichtung (15) mehrere galvanische Elemente (17) enthält, die auf die erste Fläche der Leiterplatte (7) aufgebracht sind und in Serienschaltung miteinander verbunden sind.

4. Die Ozon erzeugende Einrichtung nach Anspruch 2, wobei die Strom erzeugende Einrichtung (15) mindestens eine Batterie und/oder mindestens ein Silizium-Photovoltaikmodul enthält, das auf einer der besagten Flächen der Leiterplatte befestigt ist.

5. Die Ozon erzeugende Einrichtung nach Anspruch 1, wobei die Strom erzeugende Einrichtung (19) außerhalb der Leiterplatte (9) liegt, und mit der Ozon erzeugenden Einrichtung über elektrische Leitungen (23) verbunden ist.

6. Die Ozon erzeugende Einrichtung nach Anspruch 5, wobei die Strom erzeugende Einrichtung (19) mehrere galvanische Elemente enthält, die auf einer anderen Leiterplatte (21) aufgebracht und in Serienschaltung miteinander verbunden sind.

7. Die Ozon erzeugende Einrichtung nach Anspruch 3 oder 6, wobei die galvanischen Elemente (17) hergestellt sind aus Metallkombinationen, wahlweise Pt/Al, Pt/Ti, Pt/Mn und Pt/Mg.

8. Die Ozon erzeugende Einrichtung nach Anspruch 5, wobei die Strom erzeugende Einrichtung eine Batterie, mehrere Batterien, ein von einer öffentlichen elektrischen Anlage oder einer privaten elektrischen Anlage gespeister elektrischer Transformator, zum Beispiel ein Photovoltaikmodul oder ein Windkraftwerk ist.

9. Die Ozon erzeugende Einrichtung nach einem der Ansprüche 1 bis 8, wobei die Anoden und Kathoden hergestellt oder überzogen sind mit aktivierten oder nicht aktivierten Kohlenstofffasern oder Nanoröhren; oder die Anoden und Kathoden hergestellt aus oder überzogen sind mit Metallen oder Legierungen dieser Metalle, wahlweise aus den Spalten 3 bis 13 des Periodensystems, wie zum Beispiel Anoden und Kathoden aus oder beschichtet mit Palladium, Palladiumlegierungen, Magnesiumlegierungen oder Titanlegierungen.

10. Die Ozon erzeugende Einrichtung nach einem der Ansprüche 1 bis 9, die darüber hinaus auf der zweiten Fläche der Leiterplatte ein anderes, an die Stromquelle angeschlossenes Dünnfilm-Heizelement enthält.

11. Die Ozon erzeugende Einrichtung nach einem der Ansprüche 1 bis 10, die darüber hinaus einen zweiten Ozon erzeugenden Stromkreis enthält, der auf die zweite Fläche aufgebracht ist, wobei der zweite Ozon erzeugende Stromkreis mit dem auf der ersten Fläche aufgebrachten Ozon erzeugenden Stromkreis identisch und wie in Anspruch 1 definiert ist.

12. Die Ozon erzeugende Einrichtung nach einem der Ansprüche 1 bis 11, die darüber hinaus mehrere Lampen oder Leuchtdioden enthält, die auf der Leiterplatte befestigt sind und auch mit der Stromquelle verbunden sind, wobei die Lampen oder Leuchtdioden ein Licht mit einer Wellenlänge von 1 bis 600 nm erzeugen, und im Betrieb das Licht die Reinigung des Wassers durch das Ozon fördert.

13. Der Betrieb einer Ozon erzeugenden Einrichtung zur Reinigung von Wasser mit dem Ziel es trinkbar zu machen, wie in den Ansprüchen 1 bis 12 definiert.

14. Der Betrieb einer Ozon erzeugenden Vorrichtung nach den Ansprüchen 3 oder 6 in einer Flasche, die das zu reinigende Wasser enthält, wobei die Flasche einen Innenraum und eine Trennwand, zum Beispiel eine Membran besitzt, die den Innenraum trennt in einen oberen Raum, der das zu reinigende Wasser enthält und einen unteren Raum, der eine Elektrolytenlösung, zum Beispiel Wasser, oder eine Mischung aus Wasser und einem Salz, zum Beispiel Natriumchlorid enthält, und der Ozonerzeuger durch die Trennwand hindurch eingesetzt wird, wobei die Trennwand eine Öffnung besitzt, deren Größe der Ozon erzeugenden Einrichtung entspricht, wobei der Ozon erzeugende Schaltkreis sich im oberen Raum der Flasche befindet und die Strom erzeugende Einrichtung im unteren Raum der Flasche.

15. Der Betrieb einer Ozon erzeugenden Einrichtung nach Anspruch 8 in einer Flasche, die das zu reinigende Wasser enthält, wobei die Flasche einen Innenraum und einen Boden hat, und die Flasche eine am Boden befestigte Abteilung enthält, die hermetisch vom Innenraum der Flasche, die das zu reinigende Wasser enthält, getrennt ist, wobei besagte Abteilung eine Stromquelle enthält, die mit dem Ozon erzeugenden Schaltkreis der Ozon erzeugenden Einrichtung verbunden ist.

## Revendications

1. Dispositif ozoniseur (1) pour la purification d'eau (5), ledit dispositif comprenant:
- une carte de circuit imprimé (7) ayant une première et deuxième surface;
- un circuit (9), produisant de l'ozone, imprimé sur la première surface de ladite carte de circuit imprimé (7), ledit circuit qui produit de l'ozone comprenant une pluralité d'anodes (11) et de cathodes (13) qui sont imprimées en alternance sur la carte de circuit imprimé (7) et qui sont reliées l'une à l'autre en parallèle et à un dispositif d'alimentation (15), lesdites anodes (11) et cathodes (13) ayant des surfaces rugueuses; et
- sur la première surface de la carte de circuit imprimé, au-dessous du circuit (9) produisant de l'ozone, un élément chauffant à couches minces relié au dispositif d'alimentation (15),
dans lequel, en cours d'utilisation, lorsque ledit ozoniseur (1) est plongé dans un récipient (3) contenant de l'eau (5) à être purifiée, lesdites cathodes (13) produisent des bulles d'hydrogène et lesdites anodes (11) produisent de l'ozone et des oxydants mélangés, et dans lequel, grâce aux surfaces rugueuses, lesdites cathodes créent une coalescence desdites bulles d'hydrogène et, ainsi, une plus grande production d'ozone.

2. Dispositif ozoniseur selon la revendication 1, dans lequel ledit dispositif (15) d'alimentation est intégré à ladite carte de circuit imprimé (7).

3. Dispositif ozoniseur selon la revendication 2, dans lequel ledit dispositif (15) d'alimentation comprend une pluralité de cellules galvaniques (17) imprimées sur la première surface de ladite carte de circuit imprimé (7) et reliées l'une à l'autre en série.

4. Dispositif ozoniseur selon la revendication 2, dans lequel ledit dispositif (15) d'alimentation comprend au moins une batterie et/ou au moins un panneau solaire en silicone fixée(s) à une desdites surfaces de ladite carte de circuit imprimé.

5. Dispositif ozoniseur selon la revendication 1, dans lequel ledit dispositif (19) d'alimentation est extérieur à la carte de circuit imprimé (9) et relié audit circuit produisant de l'ozone par des fils électriques (23).

6. Dispositif ozoniseur selon la revendication 5, dans lequel ledit dispositif (19) d'alimentation comprend une pluralité de cellules galvaniques imprimées sur une autre carte de circuit imprimé (21) et reliées l'une à l'autre en série.

7. Dispositif ozoniseur selon les revendications 3 ou 6, dans lequel lesdites cellules galvaniques (17) sont fabriquées en combinaisons de métaux choisies parmi Pt/Al, Pt/Ti, Pt/Mn et Pt/Mg.

8. Dispositif ozoniseur selon la revendication 5, dans lequel ledit dispositif d'alimentation est une batterie, une pluralité de batteries, un transformateur électrique alimenté par un système électrique public ou par un système électrique individuel tel qu'un panneau solaire ou une éolienne.

9. Dispositif ozoniseur selon l'une quelconque des revendications 1 à 8, dans lequel :
lesdites anodes et cathodes sont fabriquées ou plaquées en fibres de carbone activé ou non activé ou de nanotubes; ou lesdites anodes et cathodes sont fabriquées ou plaquées en métaux ou alliages desdits métaux qui sont sélectionnés dans les colonnes 3 à 13 du Tableau Périodique, tel que des anodes et cathodes fabriquées ou plaquées en palladium, alliages de palladium, alliages de magnésium ou alliages de titane.

10. Dispositif ozoniseur selon l'une quelconque des revendications 1 à 9, comprenant additionnellement, sur la deuxième surface de la carte de circuit imprimé, un autre élément chauffant à couches minces relié au bloc d'alimentation.

11. Dispositif ozoniseur selon l'une quelconque des revendications 1 à 10, comprenant additionnellement un deuxième circuit produisant de l'ozone qui est imprimé sur la deuxième surface, ledit deuxième circuit produisant de l'ozone étant identique au circuit produisant de l'ozone qui est imprimé sur la première surface comme défini à la revendication 1.

12. Dispositif ozoniseur selon l'une quelconque des revendications 1 à 11, comprenant additionnellement une pluralité de lumières ou de diodes électroluminescentes fixées à la carte de circuit imprimé et aussi connectées au dispositif d'alimentation, lesdites lumières ou diodes électroluminescentes produisant une lumière d'une longueur d'onde de 1 à 600 nm, dans lequel, en cours d'utilisation, la lumière facilite la purification d'eau par l'ozone.

13. Utilisation d'un dispositif ozoniseur selon l'une quelconque des revendications 1 à 12 pour la purification d'eau pour la rendre potable.

14. Utilisation d'un dispositif ozoniseur, selon la revendication 3 ou 6, dans une bouteille contenant de l'eau à purifier, dans laquelle utilisation la bouteille possède un volume interne et comprend un mur de séparation, telle qu'une membrane, pour séparer ledit volume interne en un volume supérieur contenant l'eau à être purifiée et un volume inférieur contenant une solution électrolytique telle que de l'eau ou un mélange d'eau et d'un sel tel que du chlorure de sodium, ledit dispositif ozoniseur étant inséré à travers le mur de séparation, ledit mur de séparation ayant un orifice dimensionné pour s'adapter au dispositif ozoniseur, le circuit produisant de l'ozone étant situé dans le volume supérieur de la bouteille et le dispositif d'alimentation étant situé dans le volume inférieur.

15. Utilisation d'un dispositif ozoniseur, selon la revendication 8, dans une bouteille contenant de l'eau à purifier, dans laquelle utilisation la bouteille possède un volume interne et un fond, ladite bouteille comprenant un compartiment fixé audit fond et étant hermétiquement séparé du volume interne de la bouteille contenant l'eau à purifier, ledit compartiment contenant une alimentation reliée au circuit produisant de l'ozone du dispositif ozoniseur.
